# EUROPEAN PATENT SPECIFICATION

(11) **EP 2 407 340 B1**
(45) Date of publication and mention of the grant of the patent: **05.09.2018**
(21) Application number: 10169204.4
(22) Date of filing: 12.07.2010
(51) Int. Cl.: G07F 15/00, B60S 5/00, B60L 11/18

(54) **No emissions charging station for electric vehicles**
Ladestation ohne Abgase für Elektrofahrzeuge
Station de recharge sans émissions pour véhicules électriques

(43) Date of publication of application: 18.01.2012
(73) Proprietor: Nation E Ltd., 4654810 Herzlia (IL)
(72) Inventor: Jammer, Daniel, 8808 Pfäffikon, Kanton Schwyz (CH)
(74) Representative: Harrison IP Limited

(56) References cited:
- WO-A1-2009/039454
- WO-A1-2010/003757
- JP-A- 4 358 950
- JP-A- 58 180 355
- JP-A- 2002 140 398
- NL-C2- 1 014 963
- US-A1- 2009 151 368

## Description

### FIELD OF THE INVENTION

The present invention relates generally to vehicle service stations, and more specifically to environmentally-friendly electric vehicle service stations.

### BACKGROUND OF THE INVENTION

There is growing concern that the Western world uses too much energy and is too energy-dependent on a small number of sometimes hostile, oil, gas and coal producing countries. However, the population distribution requires both public and private transportation systems. In the US, there has been some legislation to reduce carbon emissions. Over 90% of carbon emissions from transport come from the private sector. Current private transportation systems are largely based on cars, automobiles, vans, motorcycles and other vehicles.

Over the last decade, there have been major strides to develop battery-driven electric vehicles for land, sea and air travel. These vehicles are aimed to reduce the pollution from current vehicles, as well as reducing dependence on fossil fuels.

One major limitation of current electric vehicles is that their batteries provide enough power only for short trips of typically less than 100 kilometers. Moreover, current battery charging techniques are slow and time-consuming, increasing both the journey time and the dependency on charging stations.

Another problem is that the power may be used up in traffic jams, air-conditioning and heating of the vehicle and the actual distance travelable by the vehicle without charging may be significantly less than the original estimate. These disadvantages render electric vehicles impractical and uneconomic.

Some attempts to overcome these problems have been published in several published patent applications. A first group of patent applications relates to static charging stations.

US Patent Application Publication No. US2010071979 to Agassi et al, describes an electric vehicle including a battery pack that can be exchanged at a battery exchange station. At the battery exchange station, an at least partially spent battery pack is exchanged for an at least partially charged battery pack. A battery bay is configured to be disposed at an underside of the electric vehicle. The battery bay includes a frame which defines a cavity. The cavity is configured to at least partially receive the battery pack therein. The battery bay comprises at least one latch rotatably pivoted about an axis substantially parallel with a plane formed by the underside of the vehicle. The latch is configured to lift, retain the battery pack at least partially within the cavity.

US Patent Application Publication No. US2009082957, to Agassi et al., discloses an electric vehicle that includes an electric motor that drives one or more wheels of the vehicle and is powered by a battery. The electric vehicle determines a status of a battery of the vehicle and a geographic location of the vehicle. The electric vehicle then identifies at least one battery service station that the vehicle can reach based on the charge status of the battery of the vehicle and the geographic location of the vehicle. The electric vehicle displays the at least one battery service station to a user of the vehicle.

French Patent Application Publication No. FR2872470 A1 discloses an automatic self-service station for e.g. electric car, has charging hoists for batteries, jack on loading modules to level plate for displacement perpendicular to plate that rotates to put or remove car battery, and cabinet with a payment desk. The station has two charging hoists for batteries, walls which support the hoists, and a roof. A repair pit has loading modules and a staircase permits maintenance service. A jack on the module levels a plate for a displacement perpendicular to another plate which rotates to put or remove the battery of a car. A cabinet has a control and payment desk placed to the side of a car driver.

US2009327165A discloses a system for quickly and efficiently re-supplying electrical energy to an electric vehicle having a rechargeable battery of a certain type of battery within a geographic area is provided. The system comprises one or more service stations within the geographic area. The service station has a storage facility for another rechargeable battery of the same type and an automated handling device for removing the battery from the vehicle and inserting the other battery into the vehicle. In one embodiment of the invention, the system may further include a system for recharging the rechargeable battery from, for example, solar energy.

The above publications largely rely on the electric car being able to reach the service station at a fixed location or having a battery replacement service. Moreover, the aforementioned patent publications rely, at least in part, on complex methods for replacing batteries, which require stocks of partially or fully charged batteries and sophisticated systems for removing the at least partially depleted battery (or batteries) and replacing it/them with at least one at least partially charged battery.

Various publications relate to low emission service stations include US2007144605A, which describes a service station with a plurality of vehicle servicing islands including liquid fuel blending pumps for dispensing and blending fuel components from underground tanks for refueling standard gasoline engine driven vehicles, standard diesel engine vehicles, vehicles with engines requiring dual fuels, vehicles with HCC1 engines requiring low octane gasoline blended with standard diesel fuel, and fuel cell powered vehicles having onboard reformers. Other service islands include pumps for dispensing compressed hydrogen to fuel cell powered vehicles that do not include on board reformers. In addition, service islands are provided for recharging the batteries of pure electric powered vehicles.

WO02103833A describes an onsite hydrogen/electricity hybrid conversion device is a reformer and/or a fuel cell. The output of the system can be varied to either meet the demand of hydrogen fuel for cell vehicles or to provide electricity for charging batteries used on the electrical vehicles. The onsite distributed energy supply system utilizing a high temperature solid oxide fuel cell system for electric generation and an integral steam reforming system for hydrogen production are the most desirable approaches. One such energy supply system allows the total C02 capture for sequestration, while concomitantly providing for high system efficiency and full system utilization. The C02 collection feature promotes the commercial realization of zero/low emission energy supply for onsite installations.

Further disclosures relevant to the subject matter include WO 2009/039454, US 2009/151368, JP 58 180355 and NL 1 014 963.

Despite the teachings imparted by all the documents above there is still a need to provide low and no emission vehicle service stations.

### SUMMARY OF THE INVENTION

According to the present invention, there is provided a no-emissions service station for electric vehicles comprising: a) an electricity provision system for charging at least one battery inside said electric vehicle, said system comprising a master charger unit for charging said at least one battery in said electric vehicle, wherein said master charger unit comprises a battery stack, an electric storage unit for storing electricity and for charging said battery stack, a no-emissions power source for powering said electric storage unit and an electricity control flow unit for ensuring that said battery stack of said master charger unit remains charged to at least a minimal threshold value of a maximum charge; b) a control system in communication with said at least one electric vehicle and said master charger unit adapted to enable said master charger unit to charge said at least one battery inside said electric vehicle; wherein said station is constructed and configured to perform at least one of the following: i. minimize grid electricity use; ii. minimize grid high peak electricity use.

These stations are constructed and configured to provide charge to electric batteries of electric vehicles, without removing them from the vehicle.

Furthermore, according to some embodiments of the present invention, the electricity provision system includes at least one of the following;
a) a solar photovoltaic electricity generating unit;
b) a wind turbine;
c) a DC-AC converter;
d) an electricity storage unit;
e) an electricity control flow unit; and f) a master charger unit.

Additionally, according to some embodiments of the present invention, the no-emissions service station for electric vehicles includes all of a) to f).

Moreover, according to some embodiments of the present invention, the no-emissions service station further includes a water provision system.

Additionally, according to some embodiments of the present invention, the water provision system includes at least one of the following;
a) An air-water generator unit;
b) A hot water holding tank;
c) A cold water holding tank;
d) A water flow control tank;
e) Conduits connecting between the above;
f) A plurality of remotely controlled valves placed in the conduits; and
g) A connection to water mains.

Furthermore, according to some embodiments of the present invention, the no-emissions service station includes all of a) to g).

Additionally, according to some embodiments of the present invention, the station is constructed and configured to perform at least one of the following;
1. minimize mains water use;
11. minimize grid electricity use;
11I. minimize grid high peak electricity use;
1V. maximize a low : high peak electricity use ratio;
V. provide no fossil-fuel related gaseous emissions;
VI. provide no fossil-fuel related liquid spills; and
V11. provide water from an air to water generator.

Furthermore, according to some embodiments of the present invention, the no-emissions service station is adapted to perform all of I. to VII.

Additionally, according to some embodiments of the present invention, the master charger unit is adapted to receive power indirectly from at least one of the solar photovoltaic electricity generating unit and the wind turbine.

Furthermore, according to some embodiments of the present invention, the no-emissions service station, further includes at least one of;
a) at least one carwash unit;
b) at least one shower unit;
c) at least one toilet unit; and
d) at least one food provision unit.

Additionally, according to some embodiments of the present invention, the no-emissions service station includes all of a) to d).

According to some additional embodiments of the present invention, the aforementioned a) to d) are adapted to receive water indirectly from the air-water generator unit.

The present invention will be more fully understood from the following detailed description of the preferred embodiments thereof, taken together with the drawings.

### BRIEF DESCRIPTION OF THE DRAWINGS

The invention will now be described in connection with certain preferred embodiments with reference to the following illustrative figures so that it may be more fully understood. With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified pictorial illustration showing a no-emission service station for electric vehicles, in accordance with an embodiment of the present invention;
Fig. 2 is a simplified flow chart of a method for control of electricity flow in the no-emission service station of Fig. 1, in accordance with an embodiment of the present invention;
Fig. 3 is a simplified flow chart of a method for control of water flow in the no-emission service station of Fig. 1, in accordance with an embodiment of the present invention;
Fig. 4 is a simplified block diagram showing further details of a carwash unit in the no-emission service station of Fig. 1, in accordance with some embodiments of the present invention;
Fig. 5 is a simplified flow chart of a method for charging a battery in an electric vehicle, in accordance with an embodiment of the present invention; and
Fig. 6 is a simplified block diagram showing further details of an electric vehicle, in accordance with some embodiments of the present invention.

In all the figures similar reference numerals identify similar parts.

### DETAILED DESCRIPTION OF PREFERRED EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

In the following detailed description, numerous specific details are set forth in order to provide a thorough understanding of some embodiments of the invention.

However, it will be understood by persons of ordinary skill in the art that some embodiments may be practiced without these specific details. In other instances, well- known methods, procedures, components, units and/or circuits have not been described in detail so as not to obscure the discussion.

The terms "plurality" or "a plurality" as used herein include, for example, "multiple" or "two or more". For example, "a plurality of items" includes two or more items.

Although portions of the discussion herein relate, for demonstrative purposes, to wired links and/or wired communications, some embodiments are not limited in this regard, and may include one or more wired or wireless links, may utilize one or more components of wireless communication, may utilize one or more methods or protocols of wireless communication, or the like. Some embodiments may utilize wired communication and/or wireless communication.

The terms "program", "computer program" or "code" as used herein include, for example, a source code, a computer program, a code or program written in a high-level programming language, a code or program written in a very high-level programming language, a code or program written in a low-level programming language, an assembly code or program, a machine language code or program, a single-thread program, a multiple-thread program, a portion of a code or program, a segment of a code or program, one or more instructions or sets of instructions, one or more subroutines, one or more procedures, one or more functions, one or more libraries, a logic, an object-oriented code or program, a portable or non-portable code or program, a code or program that requires compilation by a compiler, an originally- written code or program, a non-optimized code or program, an optimized code or program, a non-modified program, a modified program, a debugged program, a non- debugged program, a pre-compilation program version, a post-compilation program version, a pre-optimization program version, a post-optimization program version, a pre-linking program version, a post-linking program version, a program that was modified manually by a programmer, a program that was modified automatically by a compiler and/or linker and/or debugger and/or optimizer, a program that was subject to one or more iterations of optimization, a program that was subject to one or more methods of optimization, or the like.

The term "process" or "method" as used herein includes, for example, a portion or an instance of a computer program that is being executed by a computing system, e.g., by a computing system able to concurrently execute multiple processes.

Although portions of the discussion herein may relate, for demonstrative purposes, to a first process and a second process that attempt to access a shared resource, some embodiments may be used in conjunction with other combinations of processes and/or threads, for example: more than two processes; a first process of a first program, and a second process of the first program; a first process of a first program, and a second process of a second program; two or more threads; one or more threads, and one or more processes; threads of different processes; threads of different programs; processes of different programs; or other suitable combinations.

The term "resource" as used herein includes, for example, a physical and/or virtual component of a computing system; a variable; a database; a table; a record; a data item; a list; a field; an object; a memory cell; a memory area; a memory block; a disk or a portion thereof; a storage unit or a portion thereof; a file; a folder; a directory; a network connection; or the like.

The terms "shared resource" or "common resource" as used herein include, for example, a resource which may be accessed by two or more processes, threads, programs, routines, subroutines, functions, or other suitable software components and/or hardware components.

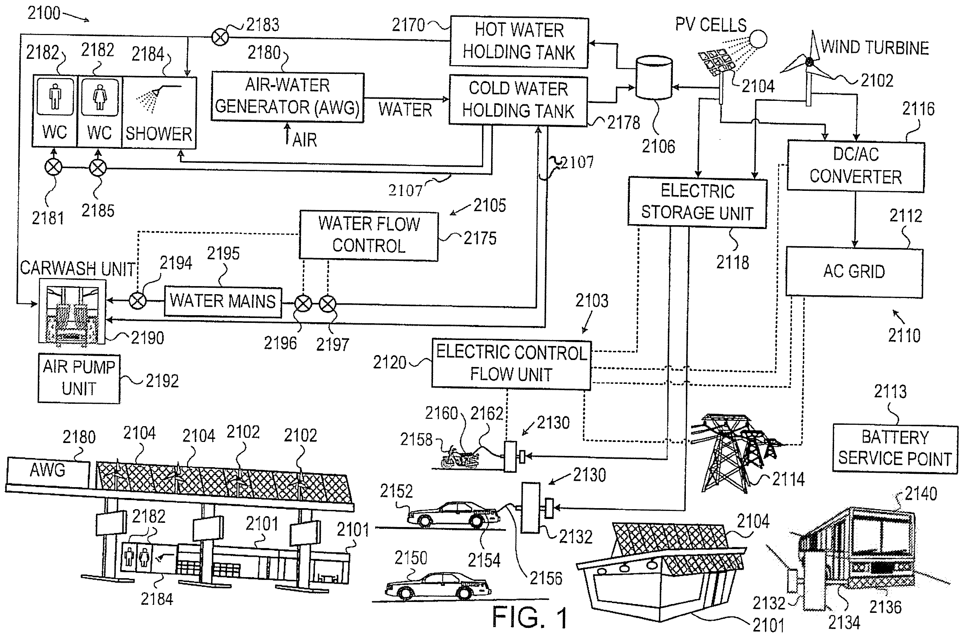

Reference is now made to Fig. 1, which is a simplified pictorial illustration showing a no-emission service station 2100 for electric vehicles, in accordance with an embodiment of the present invention. It should be understood that the details of no- emissions service station 2100 of the present invention corresponds, according to some embodiments, to "stationary service station 140" in Fig. 1 of co-pending US patent applications Nos. 12/828,398 and 12/828,406, filed July 01, 2010, incorporated herein in its entirety by reference.

By "no-emission" is meant that the service station does not handle fossil fuels and thus no vapors or emissions from fossil fuels are emitted into the environment.

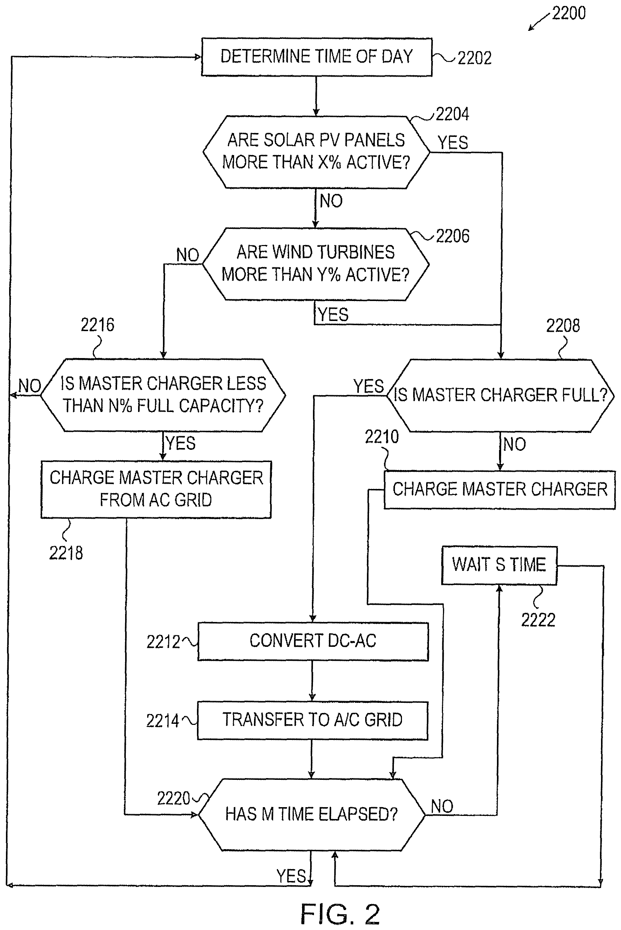

No-emissions service station 2100 is an environmentally-friendly service station. According to some embodiments, it comprises some or all of the following features:
a) At least one master charger unit 2130, which are, according to some embodiments, large batteries of in a range of 7-3000 kW.h. According to some embodiments, the master charger units may be in the range of 1-30 MW.h or even larger. These charger units are adapted to charge a plurality of electric vehicles such as, motorbikes 2160, cars 2150, 2152, buses 2140 and other vehicles (not shown). Master charger unit 2130 comprises a battery stack 2132 and a connection means 2134 for connecting to the battery pack to the electric vehicle.
b) The vehicles may be similar or identical to electric vehicle 120. The capacities and charging features of master units 2130 may be similar or identical to master battery 152, 132 in Fig. 1 of co- pending US patent application Nos. 12/828,398 and 12/828,406, filed July 01,2010.
c) An electricity control system 2103 comprising an electricity control flow unit 2120, a large electricity storage unit 2118, at least one solar panel 2104 and at least one DC-AC converter 2116. The large electricity storage unit 2118 may be of a size of 1-100 MW.h or even more. The control system may be operated and controlled via a communication network (170 in Fig. 1 of co-pending USSNs I2/828,398 and I2/828,406) and/or via wired connections. Pylons 2114 transport grid electricity from an alternating current grid 2112 to the station and into an electricity storage unit 2118. Additionally or alternatively, electricity may be transferred from the electricity storage unit to the grid. The electricity transfer is controlled by the electricity control flow unit 2I20 and one non-limiting example of the operation of this system is provided in Fig. 2.
d) A water control system 2105 comprising a water flow control unit 2I75, a cold water tank 2I78, a hot water tank 2I70, at least one water solar heater tank 2106 valves placed at suitable locations, such as, but not limited to, valves 2I8I, 2I83, 2I85, 2I94, 2I96, 2I97. Some water conduits 2107, which fluidly connect between the tanks and at least one carwash unit 2I90, at least one toilet unit 2I82, at least one shower unit; station buildings and cafe unit 2101 and any other water using facilities in the station (not shown).
e) At least one building 2101 comprising, at least in part a roof 2117 comprising solar panels 2104, such as photovoltaic solar panels (PV) and at least one solar heater water tank 2106. In some cases, the roof may also house one or more wind turbines 2102. The wind turbines and the PV panels may each provide, directly or indirectly, direct current (DC) electricity which may be converted by a DC- AC converter 2116 into AC electricity. The AC electricity may be fed into grid 2112.
f) At least one air pump unit 2192 for pumping the tires of the electric vehicles.
g) A battery service point 2113 adapted to perform electrical checks to the battery packs of the electric cars, to check for leakage, breakage and other faults. The service point will also provide replacement batteries or parts thereof as may be required to the electric vehicles.

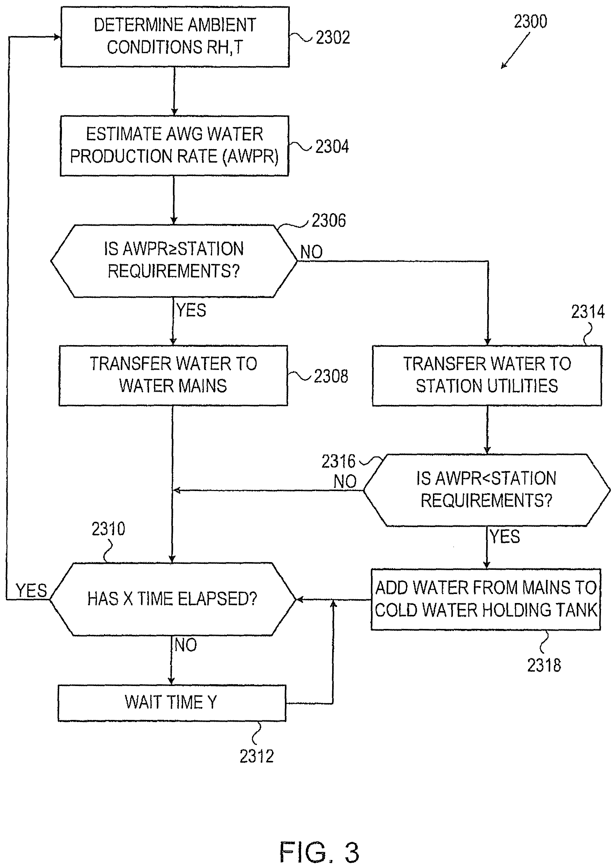

It should be understood that no-emissions service station 2100 is constructed and configured to provide at least some of the following advantageous energy-efficient and environmental features over the prior art service stations:
a) No fossil fuels used in service station 2100, whether in the liquid or gaseous phase, thus no emissions due to the use, handling, transport or transfer of these fuels. No gaseous emissions to the environment therefrom and no global warming effect therefrom. No spills or liquid contamination of the soil, sewers or wastewater from the service station.
b) Use of air-water generator (s) 2I80 thus reducing dependency on mains water supply from mains water 2I95. There may even be a positive supply of water from station 2100 to the mains water 2I95. This is described in further detail with reference to Fig. 3 hereinbelow.
c) Efficient provision, at least in part, of own supply of electricity from PV panels 2104 and/or wind turbines 2102, thus minimizing use of grid electricity from AC grid 2112. Off-peak charging of master charger units, as described with reference to Fig. 2 hereinbelow.
d) No use of hydrogen-based fuels, per prior art no-emission service stations described in US2007I44605 and WO02I03833A, thereby reducing explosion risks.

Turning back to Fig. 1, master charger unit 2I30 is adapted to charge electric vehicles 2I50, 2152, 2158, 2140. The electric vehicles each comprise at least one battery pack such as battery pack 2I54, 2160, 2136 or not shown. The size of the battery pack depends on the weight of the vehicle, motor size etc.

Some examples of typical battery pack sizes appear in Table 1 hereinbelow.

**Table 1. Typical Battery sizes for different sizes of electric vehicle**

| **Vehicle type** | **Vehicle weight (ton)** | **Motor size [HP]** | **Battery size range [kW.h]** | **Distance range before charging [km]** |
|---|---|---|---|---|
| Motorbike | 0.15 - 0.30 | 10 - 100 | 1.5 - 7 | 50 - 100 |
| e.g. Electric Motorsport GPR-s | 0.18 | 19 | 3.3 | 70 |
| Small car | 0.80 - 1.50 | 35 - 100 | 7 - 25 | 50 - 150 |
| e.g. Mitsubishi I-MIEV | 1.10 | 64 | 16 | 110 |
| Estate car | 1.50 - 2.80 | 75 - 350 | 14 - 50 | 80 - 300 |
| e.g. | 2.02 | | | |
| BYD e6 | | 100 - 272 | 16 - 48 | 90 - 300 |
| 4 x 4 jeep | 2.0 - 4.0 | 120 - 400 | 16 - 60 | 80 - 350 |
| 4x4 e-Jeep | | | | |
| 15 seater minibus | 3.5 - 5.0 | 100 - 300 | 20 - 70 | 80 - 300 |
| e.g. | | | | |
| Smith Electric Vehicles Edison LWB | 4.3 | 122 | 50 | 200 |
| 60 seater bus | 18 - 30 | 250 - 600 | 30 - 150 | 70 - 300 |
| Truck | 8 - 30 | 120 - 500 | 50 - 200 | 90 - 350 |
| e.g. Smith Electric Vehicles Newton 12t | 12 | 163 | 80 | 160 |

Some typical charging time ranges from the master charger unit 2130 to the electric vehicles are provided in Table 2.

**Table 2 Typical Battery Charging times for different sizes of electric vehicle**

| **Vehicle type** | **Battery size range [kW.h]** | **Time range required to charge battery from master charger vehicle Min** | **C value** | **Time range required to charge battery from breakdown vehicle min** | **C value** |
|---|---|---|---|---|---|
| Motorbike | 1.5 - 7 | 10 - 720 | 0.20 - 3 | 10 - 720 | 0.20 - 3.0 |
| Small car | 7 - 25 | 10 - 720 | 0.20 - 3 | 10 - 720 | 0.20 - 3.0 |
| Estate car | 14 - 50 | 20 - 720 | 0.20 - 3 | 20 - 720 | 0.20 - 3.0 |
| 4 x4 jeep | 16 - 60 | 20 - 720 | 0.20 - 3 | 20 - 720 | 0.20 - 3.0 |
| 15 seater minibus | 20 - 70 | 25 - 720 | 0.20 - 3 | 25 - 720 | 0.20 - 3.0 |
| 60 seater bus | 30 - 150 | 40 - 720 | 0.20 - 3 | 40 - 720 | 0.20 - 3.0 |

The master charger unit 2130 may be constructed and configured to charge a number of electric vehicles. Typical values of the numbers of EVs that the master charger unit can charge are provided in Table 3 hereinbelow.

**Table 3 Examples of Master Charger Unit charging capacity.**

| **Master Vehicle type** | **Master Battery size range [KW.h]** | **No of 1-2 ton EVs To be charged by Master charger unit** | **No of 2-5 ton EVs to be charged by Master charger unit** | **Time range required to charge battery from breakdown vehicle [min]** |
|---|---|---|---|---|
| Van | 7 - 210 | 3 - 70 | 2 - 50 | 10 - 720 |
| Truck | 50 - 3000 | 16 - 1000 | 10 - 600 | 10 - 720 |
| Semi-trailer | Up to 1000 | Up to 350 | Up to 200 | 10 - 720 |

Reference is now made to Fig. 2, which is a simplified flow chart 2200 of a method for control of electricity flow in the no-emission service station of Fig. 1, in accordance with an embodiment of the present invention. No emission service station 2100 is constructed and configured to produce both water from air-water generator 2180 and electricity from PV panels 2104 and/or from wind turbine(s) 2102.

During the evening, night and early morning, most solar panels cannot produce electricity because they absorb solar rays in the visible spectrum, which only impinge on the panels during the day. However, several types of PV panels, such as those described in International Patent Application publication nos. WO09069129A2 and WO08139479 A2 provide for PV panels, are active in low light conditions. The present invention may use any PV panel known in the art.

Electricity control flow unit 2120 is constructed and configured to ensure that the master charger units 2130 remain charged to a least a minimum threshold value (such as 15% of the maximum, say of 3000 kW.h) independent of the time of day. This is designed such that vehicles can always be charged at the service station.

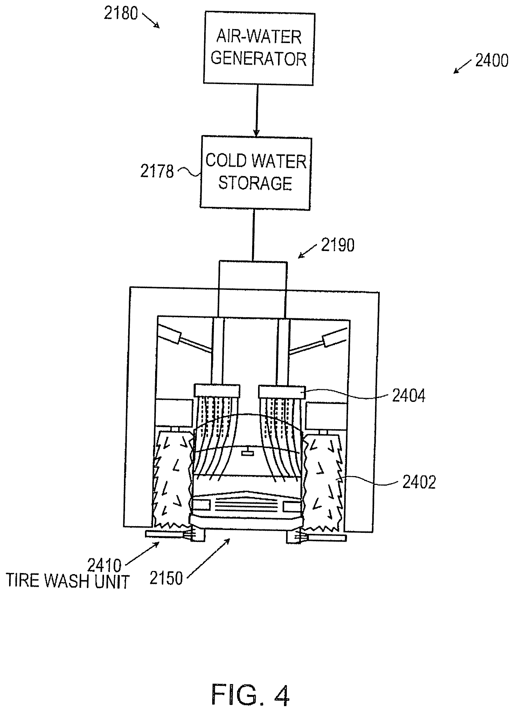

In a time of day checking step 2202, the time of day is determined by the electricity control flow unit. Let the time be for example 2 am. At 2 am there is no sun and there may or may not be any wind, but the tariff rate for downloading electricity is relatively cheap as this time is off-peak. It should be further noted that, at any stage in this method historical data may be recalled from data stored in system 400 in stationary service station module 414 in Fig. 4 - Decision making by the electricity control flow unit may be based on real-time measured parameters, on historical data or on combinations thereof.

In a solar panel activity checking step 2204, the activity of the solar panels is determined. This may be by measuring a change in temperature of water in tank 21 06, by measuring an output of DC electricity from the panels, or by any other suitable method or combinations thereof, known in the art. At 2 am, the solar panels are typically, but not necessarily, substantially inactive.

In a wind turbine activity checking step 2206, the electrical output of the turbines and/or the rotational speed of the turbine is determined. If the wind turbines are less active than a threshold value (such as 10% of their maximal output), then the master charger unit capacities are determined in checking step 2216. If less active (yes), then the electricity control flow unit 2120 transfers electricity from the electricity storage unit to the master charger units 2130, thereby charging the master charger units. This effects transfer of off-peak electricity from grid 2112 to the storage unit 2118. In some cases, there is a transformer or AC-DC converter 2119 adapted to convert the grid electricity to suitable outputs for receipt by the master charger units.

In other cases, the AC electricity is charged directly to the master charger units.

In another time checking step 2220, a check is performed to determine if the time required to charge the master charger has elapsed. If yes, then the electricity control flow unit 2120 stops the charging sequence of the master charging unit. After another predetermined time period, such as ten minutes, step 2202 is performed once more.

The electricity control flow unit 2120 may be any suitable metering device known in the art (MeterUs, or newer retrofit US domestic digital electricity meter Elster REX with 900MHz mesh network topology for automatic meter reading and "EnergyAxis" time-of-use metering. Each local mesh networked smart meter has a hub such as this Elster A3 Type A30 which interfaces 900MHZ smart meters to the metering automation server via, for example, a landline (not shown)).

A smart meter is an advanced meter (usually an electrical meter) that identifies consumption in more detail than a conventional meter; and optionally, but generally, communicates that information via some network back to the local utility for monitoring and billing purposes (telemetering).

Turning back to checking step 2216, if the master charger unit is more than N% (such as 15%) of the full capacity, the system will wait a predetermined period of time, such as ten minutes and then return to step 2202.

If at checking step 2216, the master charger unit is less than N% of the full capacity, then in a charging step 2218, electricity is drawn from electricity grid 2110 and is transferred directly or indirectly via an AC/DC converter 2113 and/or via the electric control flow unit to master charger unit 2130.

Turning back to step 2206, if at 2 am the wind turbine(s) are sufficiently active, a master charger unit checking step 2208 is performed to see whether the unit is fully charged. If no, electricity generated from the wind turbine is used to charge the master charger unit in a charging step 2210.

In another time checking step 2220, a check is performed to determine if the time required to charge the master charger has elapsed. If no, a waiting step 2222 is performed for a predetermined period of time, such as two minutes. Thereafter, time checking step 2220 is performed again. At step 2220, if the outcome is yes, then the electricity control flow unit 2120 stops the charging sequence of the master charging unit. After another predetermined time period, such as ten minutes, step 2202 is performed once more.

Turning back to step 2208, if the master charger units are full and at least one of the solar PV panels and the wind turbines are generating electricity, then in a DC-AC conversion step 2212, the electricity produced is converted into AC electricity.

In an AC electricity transfer step 2214, the AC electricity is transferred to grid 2112.

The method of this flowchart may be performed semi-continuously. During the day, in many cases, the PVs and/or wind turbines will produce most or all of the station's power requirements and may also feed in electricity to the grid.

During the night, if required, some electricity may be drawn from the grid at off-peak tariffs to charge the master charger units.

The above method is intended and adapted to minimize the amount of electricity drawn from the grid and maximize the amount of electricity transferred to the grid, as well as to minimize the cost of the electricity drawn from the grid.

Additionally or alternatively, the above method is adapted to maximize the income to the service station from providing electricity to the grid, particularly at high-peak hours.

Reference is now made to Fig. 3, which is a simplified flow chart 2300 of a method for control of water flow in the no-emission service station of Fig. 1, in accordance with an embodiment of the present invention.

In an ambient conditions determining step 2302, ambient conditions, such as temperature and relative humidity are determined by methods known in the art, by water flow control system 2105.

It should be further noted that, at any stage in this method historical data may be recalled from data stored in system 400 in stationary service station module 414 in Fig. 4 of co-pending US patent application Nos. 12/828,398 and 12/828,406, filed July 01, 2010. Decision making by the water flow control system may be based on real-time measured parameters, on historical data or on combinations thereof.

In a calculation step 2304, the approximate production rate of water (A WPR) from the air-water generator 2180 are estimated. For example, if it is freezing and RH is less than 5%, no water may be produced, whereas if it is 25 Celsius and RH=50%, then the AWPR may be very substantial.

In a checking step 2306, calculations are performed to see if AWPR is greater than station 2100 requirements. If yes, the required water is transferred to the station utilities (carwash, toilets, showers etc.) and excess water is transferred to water mains 2195 in a water transfer step 2308.

If the outcome of checking step 2306 is no, then the water produced is transferred to the station utilities. In a second checking step 2316, the water deficit (station requirements/time-AWPR) is calculated. If the AWPR is less than the station requirements over the same time period, then water is fed from the mains to the cold water holding tank 2178 in water transfer step 2318. Thereafter, it is checked to see if a predetermined time period, such as five minutes has elapsed in checking step 2310. If the time period has not elapsed, then a wait step 2312, such as one minute is performed. Steps 2310 and 2312 are repeated iteratively until the predetermined time period has elapsed. Thereafter step 2302 is repeated.

The method of Fig. 3 is adapted to minimize the use of mains water and maximize the use of water from the air-water generator.

Reference is now made to Fig. 4, which is a simplified block diagram showing further details of a carwash unit in the no-emission service station of Fig. 1, in accordance with some embodiments of the present invention. Carwash unit 2400 comprises one or more standard automated car wash system 2190 comprising rotating elements 2402, 2404, or other similar suitable elements, adapted to wash the surfaces of the car. Additionally, the carwash unit 2400 may comprise one or more tire wash units 2410.

Carwash unit 2400 receives water from one or more cold water tanks 2178, which receive water from at least one air-water generators 2180 and/or from mains water 2195.

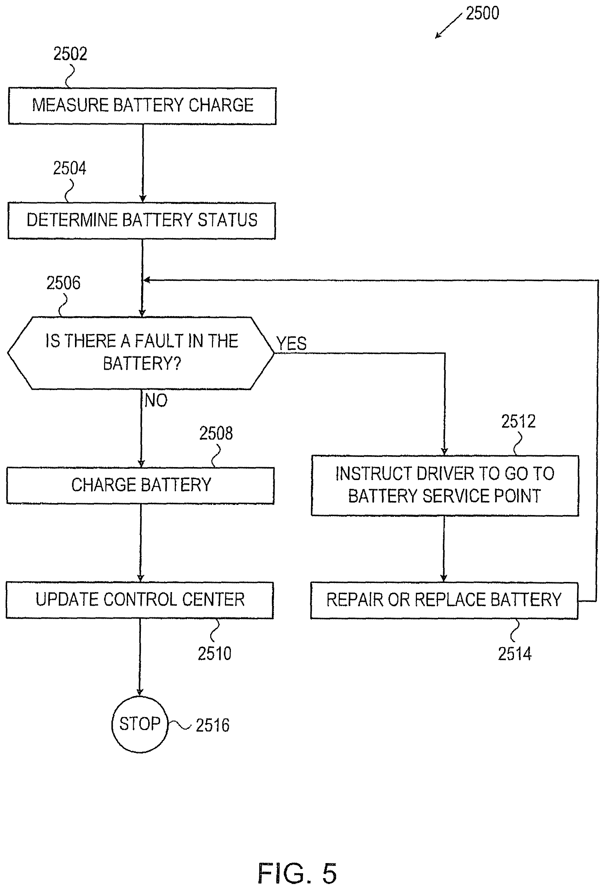

Reference is now made to Fig. 5, which is a simplified flow chart 2500 of a method for charging a battery in an electric vehicle, in accordance with an embodiment of the present invention.

The word "battery" or "battery pack", "battery module", or "battery unit" may be used herein to define the energy provision unit, such as batteries 2154, 2160, 2136 of the electric vehicles shown in Fig. 1.

In a measuring step 2502, the charge of battery, such as batteries 2154, 2160, 2136 is determined by methods known in the art.

In a battery status determining step 2504, it is determined whether the battery is fully functional, partially functional or non-functional. This may be performed by performing standardized electrical tests.

In a fault determining step 2506, the outcomes of the previous two steps are compared with historical data in control system 400 (Fig. 4 of co-pending US patent application Nos. 12/828,398 and 12/828,406, filed July 01, 2010).

If no fault is found, the master charger unit is activated to charge the vehicle's battery via a connection module 2156 in a battery charging step 2508.

In a control center updating step 2510, control center 110 (Fig. 1 of co-pending US patent application Nos. 12/828,398 and 12/828,406, filed July 01, 2010) is updated with respect to the quantity of power supplied. Details of the amount of power provided, distance traveled by the electric and data pertaining to the time of day and week are relayed to the control center. The data may be stored in the energy provision module 414 and user account module 422, for example.

If a fault is found in step 2506, the driver is instructed to go to the battery service point in an instructing step 2512.

In a repairing step 2514, the battery service point checks, repairs and replaces battery, as may be required.

Thereafter steps 2506-2510 are performed and the control center is updated with respect to all services provided to the vehicle.

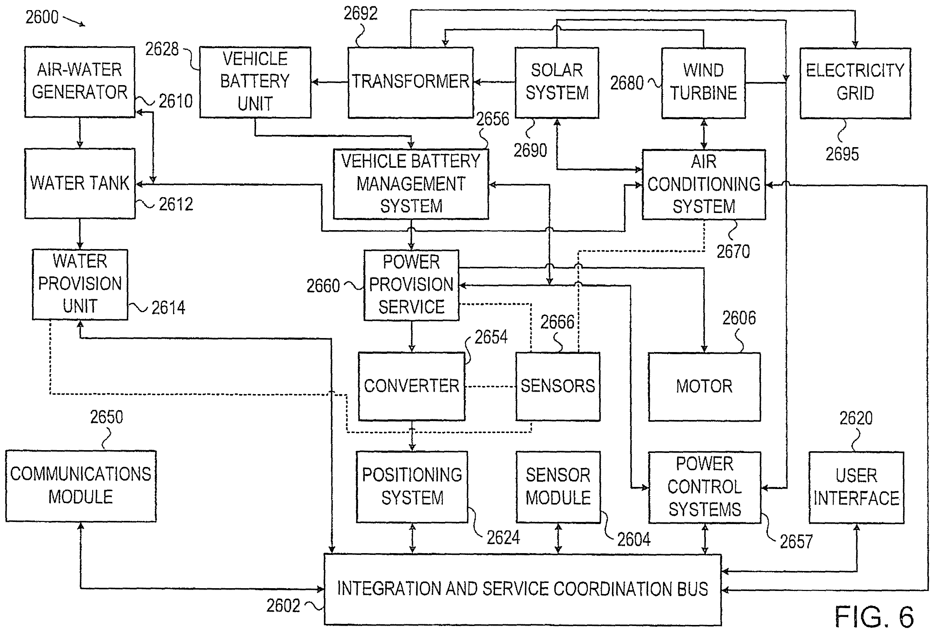

Reference is now made to Fig. 6, which is a simplified block diagram 2600 showing further details of an electric vehicle, in accordance with some embodiments of the present invention.

The electric vehicle may comprise one or more or all of the following components:
a) an air-water generator system 2610; b) a wind turbine energy system 2680; c) a solar energy system 2690; and d) an energy transformer system 2692.

An air-water generator system 2610, may be a system such as that described in US Patent 7,722,706 or in US Patent Application Publication No. 2009151368A1, incorporated herein in its entirety by reference, or any other air-water generator system known in the art.

Wind turbine system 2680 may be any suitable wind turbine system known in the art, such as that described in US7709972.

Solar energy system 2690 may be any suitable solar panel system suitable for a vehicle, such as that described in US Patent Application Publication No.US2007261896 Alor the system of US7469541.

Battery module 2I54 may be charged from an electricity grid 2695 via transformer system 2692. Additionally or alternatively, module 2154 may be charged from master charger unit 2I30. Additionally or alternatively, module 2I54 may receive some or all of its power from solar system 2690 and/or wind turbine system 2680.

Battery module 2I54 is controlled by a battery management system 2656 and sensors 2606, in communication via a sensor module 2604 with an integration and service coordination bus 2602. Bus 2602 is constructed and configured to receive inputs and outputs from a user interface 2620, controlled by control center 110 (Fig. 1 of co-pending US patent application Nos. 12/828,398 and 12/828,406, filed July 01, 2010.

According to some embodiments, the electric vehicle comprises all of the aforementioned systems. Depending on the systems on board the electric vehicle, the transformer system 2692 will be built to enable power transfer from these systems to battery unit, as is known in the art.

An air conditioning system 2670 may be selected from a standard vehicle air conditioning system as is known in the art, a solar air conditioning system as described in US2010031682A or WO08114266 and may be integrated with the air-water generator.

The air-water generator may condense and/or extract water from air. The collected water is stored in a water tank 3I2, enabling the master vehicle to provide water to electric vehicles I20 (Fig. 1) as may be required, from a water provision service 2614, as well as providing the water requirements of the master vehicle. Additionally, the water may be used in the air conditioning system 2670.

Bus 2602 also coordinates information from positioning system 2624 and a communication module 2650.

Bus 2602 communicates information regarding the services provided by the master vehicle to the electric vehicle to control center 110 (Fig. 1 of co-pending US patent application No. 12/828,406, filed July 01, 2010). For example, the services may include, but are not limited to, battery pack 2154 charging, battery pack testing, water provision, towing services and other services.

Other suitable operations or sets of operations may be used in accordance with some embodiments. Some operations or sets of operations may be repeated, for example, substantially continuously, for a pre-defined number of iterations, or until one or more conditions are met. In some embodiments, some operations may be performed in parallel, in sequence, or in other suitable orders of execution.

Discussions herein utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Some embodiments may take the form of an entirely hardware embodiment, an entirely software embodiment, or an embodiment including both hardware and software elements. Some embodiments may be implemented in software, which includes but is not limited to firmware, resident software, microcode, or the like.

Some embodiments may utilize client/server architecture, publisher/subscriber architecture, fully centralized architecture, partially centralized architecture, fully distributed architecture, partially distributed architecture, scalable Peer to Peer (P2P) architecture, or other suitable architectures or combinations thereof.

Some embodiments may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be or may include an electronic, magnetic, optical, electromagnetic, InfraRed (IR), or semiconductor system (or apparatus or device) or a propagation medium. Some demonstrative examples of a computer-readable medium may include a semiconductor or solid state memory, magnetic tape, a removable computer diskette, a Random Access Memory (RAM), a Read-Only Memory (ROM), a rigid magnetic disk, an optical disk, or the like. Some demonstrative examples of optical disks include Compact Disk-Read-Only Memory (CD-ROM), Compact Disk-Read/Write (CD-R/W), DVD, or the like.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/0 devices (including but not limited to keyboards, displays, pointing devices, etc.) may be coupled to the system either directly or through intervening I/0 controllers. In some embodiments, network adapters may be coupled to the system to enable the data processing system to become coupled to other data processing systems or remote printers or storage devices, for example, through intervening private or public networks. In some embodiments, moderns, cable moderns and Ethernet cards are demonstrative examples of types of network adapters. Other suitable components may be used.

Some embodiments may be implemented by software, by hardware, or by any combination of software and/or hardware as may be suitable for specific applications or in accordance with specific design requirements. Some embodiments may include units and/or sub-units, which may be separate of each other or combined together, in whole or in part, and may be implemented using specific, multi-purpose or general processors or controllers. Some embodiments may include buffers, registers, stacks, storage units and/or memory units, for temporary or long-term storage of data or in order to facilitate the operation of particular implementations.

Some embodiments may be implemented, for example, using a machine- readable medium or article which may store an instruction or a set of instructions that, if executed by a machine, cause the machine to perform a method and/or operations described herein. Such machine may include, for example, any suitable processing platform, computing platform, computing device, processing device, electronic device, electronic system, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit; for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

Functions, operations, components and/or features described herein with reference to one or more embodiments, may be combined with, or may be utilized in combination with, one or more other functions, operations, components and/or features described herein with reference to one or more other embodiments, or vice versa.

Any combination of one or more computer usable or computer readable
medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer- readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet usmg an Internet Service Provider).

The present invention IS described herein with reference to flow chart illustrations and/or block diagrams of methods, apparatus (systems) and computer program products according to embodiments of the invention. It will be understood that each block of the flow chart illustrations and/or block diagrams, and combinations of blocks in the flow chart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flow charts and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flow charts and/or block diagram block or blocks.

The flow charts and block diagrams in the Figures illustrate the architecture, functionality, and operation of possible implementations of systems, methods and computer program products according to various embodiments of the present invention. In this regard, each block in the flow charts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow chart illustrations, and combinations of blocks in the block diagrams and/or flow chart illustrations, can be implemented by special purpose hardware-based systems that perform the specified functions or acts, or combinations of special purpose hardware and computer instructions.

Although the embodiments described above mainly address assessing test coverage of software code that subsequently executes on a suitable processor, the methods and systems described herein can also be used for assessing test coverage of firmware code. The firmware code may be written in any suitable language, such as in C. In the context of the present patent application and in the claims, such code is also regarded as a sort of software code. or in accordance with specific design requirements. Some embodiments may include units and/or sub-units, which may be separate of each other or combined together, in whole or in part, and may be implemented using specific, multi-purpose or general processors or controllers. Some embodiments may include buffers, registers, stacks, storage units and/or memory units, for temporary or long-term storage of data or in order to facilitate the operation of particular implementations.

Some embodiments may be implemented, for example, using a machine-readable medium or article which may store an instruction or a set of instructions that, if executed by a machine, cause the machine to perform a method and/or operations described herein. Such machine may include, for example, any suitable processing platform, computing platform, computing device, processing device, electronic device, electronic system, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit; for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

Functions, operations, components and/or features described herein with reference to one or more embodiments, may be combined with, or may be utilized in combination with, one or more other functions, operations, components and/or features described herein with reference to one or more other embodiments, or vice versa.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present invention is described herein with reference to flow chart illustrations and/or block diagrams of methods, apparatus (systems) and computer program products according to embodiments of the invention. It will be understood that each block of the flow chart illustrations and/or block diagrams, and combinations of blocks in the flow chart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flow charts and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flow charts and/or block diagram block or blocks.

The flow charts and block diagrams in the Figures illustrate the architecture, functionality, and operation of possible implementations of systems, methods and computer program products according to various embodiments of the present invention. In this regard, each block in the flow charts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow chart illustrations, and combinations of blocks in the block diagrams and/or flow chart illustrations, can be implemented by special purpose hardware-based systems that perform the specified functions or acts, or combinations of special purpose hardware and computer instructions.

Although the embodiments described above mainly address assessing test coverage of software code that subsequently executes on a suitable processor, the methods and systems described herein can also be used for assessing test coverage of firmware code. The firmware code may be written in any suitable language, such as in C. In the context of the present patent application and in the claims, such code is also regarded as a sort of software code.

The references cited herein teach many principles that are applicable to the present invention. Therefore the full contents of these publications are incorporated by reference herein where appropriate for teachings of additional or alternative details, features and/or technical background.

## Claims

1. A no-emissions service station (2100) for electric vehicles (2158, 2150, 2152, 2140) comprising:
a) an electricity provision system for charging at least one battery (2154, 2160, 2136) inside said electric vehicle, said system comprising a master charger unit (2130) for charging said at least one battery in said electric vehicle, wherein said master charger unit comprises a battery stack (2132), an electric storage unit (2118) for storing electricity and for charging said battery stack, a no-emissions power source (2104, 2102) for powering said electric storage unit and an electricity control flow unit (2120) for ensuring that said battery stack of said master charger unit remains charged to at least a minimal threshold value of a maximum charge;
b) a control system in communication with said at least one electric vehicle and said master charger unit adapted to enable said master charger unit to charge said at least one battery inside said electric vehicle;
wherein said station is constructed and configured to perform at least one of the following:
i. minimize grid electricity use;
ii. minimize grid high peak electricity use.

2. A no-emissions service station for electric vehicles according to claim 1, wherein said electric vehicle is selected from the group consisting of an electric motorbike (2158), an electric car (2150, 2152), an electric truck, an electric emergency vehicle and an electric army vehicle.

3. A no-emissions service station for electric vehicles according to claim I, further comprising a connection to an electrical grid (2112), wherein said electricity provision system comprises:
a) a solar photovoltaic electricity generating unit (2104); and/or
b) a wind turbine (2102); and also comprises:
c) a DC-AC converter (2116) for handling interconversions between said electricity provision system and said electrical grid through said connection.

4. A no-emissions service station for electric vehicles according to claim 3, the station comprising both said solar photovoltaic electricity generating unit and said wind turbine, and wherein if said electricity control flow unit determines that said master charger unit has greater than a maximum threshold percentage of said maximum charge, power from one or both of said solar photovoltaic electricity generating unit or said wind turbine is provided to said connection to said electrical grid through said DC-AC converter and alternatively wherein power from one or both of said solar photovoltaic electricity generating unit or said wind turbine is provided to said master charger unit.

5. A no-emissions service station according to claim 1, further comprising a water provision system, wherein said water provision system comprises:
a) an air-water generator unit (2180);
b) a water flow control tank (2175);
c) a water control system (2105);
d) conduits (2107) connecting between the above and controlled by said water control system;
e) a plurality of remotely controlled valves (2181, 2183, 2185, 2194, 2196, 2197) placed in said conduits and controlled by said water control system; and
f) a connection to water mains (2195).

6. A no-emissions service station according to claim 5, wherein said water control system controls water generation by said air-water generator unit according to a combination of historical data and real-time measured parameters.

7. A no-emissions service station according to claim 1, wherein said station is constructed and configured to perform at least one of the following:
1. minimize mains water use;
2. maximize a low : high peak electricity use ratio;
3. provide no fossil-fuel related gaseous emissions;
4. provide no fossil-fuel related liquid spills; and
5. provide water from an air to water generator.

8. A no-emissions service station according to claim 7, wherein said station is adapted to perform all of:
i. minimize mains water use;
ii. minimize grid electricity use;
iii. minimize grid high peak electricity use;
iv. maximize a low :high peak electricity use ratio;
v. provide no fossil-fuel related gaseous emissions;
vi. provide no fossil-fuel related liquid spills; and
vii. provide water from an air to water generator

9. A no-emissions service station according to claim 5, further comprising at least one of:
1) at least one carwash unit (2400);
2) at least one shower unit (2184);
3) at least one toilet unit (2182); and
4) at least one food provision unit.

10. A no-emissions service station according to claim 8, comprising all units of:
1) at least one carwash unit;
2) at least one shower unit;
3) at least one toilet unit;
and
4) at least one food
provision unit.

11. A no-emissions service station according to claim 9, wherein said at least one carwash unit, at least one shower unit, at least one toilet unit, and at least one food provision unit are adapted to receive water indirectly from said air-water generator unit.

## Patentansprüche

1. Emissionsfreie Servicestation (2100) für Elektrofahrzeuge (2158, 2150, 2152, 2140), umfassend:
a) ein Elektrizitätsbereitstellungssystem zum Laden von mindestens einer Batterie (2154, 2160, 2136) im Elektrofahrzeug, wobei das System eine Hauptladeeinheit (2130) zum Laden der mindestens einen Batterie im Elektrofahrzeug umfasst, wobei die Hauptladeeinheit einen Batteriestapel (2132), eine elektrische Speichereinheit (2118) zum Speichern von Elektrizität und zum Laden des Batteriestapels, eine emissionsfreie Energiequelle (2104, 2102) zum Versorgen der elektrischen Speichereinheit mit Energie und eine Elektrizitätskontrollflusseinheit (2120) zum Sicherstellen, dass der Batteriestapel der Hauptladeeinheit auf mindestens einen minimalen Schwellenwert einer maximalen Ladung aufgeladen bleibt, umfasst;
b) ein Kontrollsystem in Verbindung mit dem mindestens einen Elektrofahrzeug und der Hauptladeeinheit, das angepasst ist, um der Hauptladeeinheit zu ermöglichen, die mindestens eine Batterie innerhalb des Elektrofahrzeugs zu laden;
wobei die Station aufgebaut und konfiguriert ist, um mindestens eines des Folgenden durchzuführen:
i. Minimieren der Netzelektrizitätsnutzung;
ii. Minimieren der hohen Netzelektrizitätsnutzung.

2. Emissionsfreie Servicestation für Elektrofahrzeuge nach Anspruch 1, wobei das Elektrofahrzeug ausgewählt ist aus der Gruppe bestehend aus einem elektrischen Motorrad (2158), einem elektrischen Auto (2150, 2152), einem elektrischen LKW, einem elektrischen Einsatzfahrzeug und einem elektrischen Militärfahrzeug.

3. Emissionsfreie Servicestation für Elektrofahrzeuge nach Anspruch 1, ferner umfassend eine Verbindung mit einem elektrischen Netz (2112), wobei das Elektrizitätsbereitstellungssystem Folgendes umfasst:
a) eine solarbetriebene Photovoltaikelektrizitätserzeugungseinheit (2104); und/oder
b) eine Windturbine (2102); und außerdem Folgendes umfasst:
c) einen Wechselrichter (2116) zum Handhaben von Umwandlungen zwischen dem Elektrizitätsbereitstellungssystem und dem elektrischen Netz durch die Verbindung.

4. Emissionsfreie Servicestation für Elektrofahrzeuge nach Anspruch 3, wobei die Station sowohl die solarbetriebene Photovoltaikelektrizitätserzeugungseinheit als auch die Windturbine umfasst und wobei, wenn die Elektrizitätskontrollflusseinheit bestimmt, dass die Hauptladeeinheit einen größeren als einen maximalen Schwellenprozentsatz der maximalen Ladung aufweist, Energie von einer oder beiden der solarbetriebenen Photovoltaikelektrizitätserzeugungseinheit oder der Windturbine der Verbindung zum elektrischen Netz durch den Wechselrichter bereitgestellt wird und wobei alternativ Energie von einer oder beiden der solarbetriebenen Photovoltaikelektrizitätserzeugungseinheit oder der Windturbine der Hauptladeeinheit bereitgestellt wird.

5. Emissionsfreie Servicestation nach Anspruch 1, ferner umfassend ein Wasserbereitstellungssystem, wobei das Wasserbereitstellungssystem Folgendes umfasst:
a) eine Luft-Wasser-Erzeugungseinheit (2180);
b) einen Wasserflusskontrolltank (2175);
c) ein Wasserkontrollsystem (2105);
d) Leitungen (2107), die eine Verbindung zwischen dem Obigen herstellen und von dem Wasserkontrollsystem kontrolliert werden;
e) eine Vielzahl von aus der Ferne kontrollierten Ventilen (2181, 2183, 2185, 2194, 2196, 2197), die in den Leitungen positioniert sind und von dem Wasserkontrollsystem kontrolliert werden; und
f) eine Verbindung zum Wassernetz (2195).

6. Emissionsfreie Servicestation nach Anspruch 5, wobei das Wasserkontrollsystem die Wassererzeugung durch die Luft-Wasser-Erzeugungseinheit gemäß einer Kombination aus historischen Daten und in Echtzeit gemessenen Parametern kontrolliert.

7. Emissionsfreie Servicestation nach Anspruch 1, wobei die Station aufgebaut und konfiguriert ist, um mindestens eines des Folgenden durchzuführen:
1. Minimieren der Leitungswassernutzung;
2. Maximieren eines Verhältnisses von geringer zu hoher Elektrizitätsnutzung;
3. Bereitstellen von nicht fossilen Brennstoffen entsprechenden gasförmigen Emissionen;
4. Bereitstellen von nicht fossilen Brennstoffen entsprechenden Flüssigkeitsverschüttungen; und
5. Bereitstellen von Wasser aus einem Luft-Wasser-Erzeuger.

8. Emissionsfreie Servicestation nach Anspruch 7, wobei die Station angepasst ist, um alles von Folgendem durchzuführen:
i. Minimieren der Leitungswassernutzung;
ii. Minimieren der Netzelektrizitätsnutzung;
iii. Minimieren der hohen Netzelektrizitätsnutzung;
iv. Maximieren eines Verhältnisses von geringer zu hoher Elektrizitätsnutzung;
v. Bereitstellen von nicht fossilen Brennstoffen entsprechenden gasförmigen Emissionen;
vi. Bereitstellen von nicht fossilen Brennstoffen entsprechenden Flüssigkeitsverschüttungen; und
vii. Bereitstellen von Wasser aus einem Luft-Wasser-Erzeuger.

9. Emissionsfreie Servicestation nach Anspruch 5, ferner umfassend mindestens eines von:
1) mindestens einer Autowascheinheit (2400);
2) mindestens einer Duscheinheit (2184);
3) mindestens einer Toiletteneinheit (2182); und
4) mindestens einer Lebensmittelbereitstellungseinheit.

10. Emissionsfreie Servicestation nach Anspruch 8, ferner alle Einheiten von Folgendem umfassend:
1) mindestens einer Autowascheinheit;
2) mindestens einer Duscheinheit;
3) mindestens einer Toiletteneinheit; und
4) mindestens einer Lebensmittelbereitstellungseinheit.

11. Emissionsfreie Servicestation nach Anspruch 9, wobei die mindestens eine Autowascheinheit, mindestens eine Duscheinheit, mindestens eine Toiletteneinheit und mindestens eine Lebensmittelbereitstellungseinheit angepasst sind, um Wasser indirekt aus der Luft-Wasser-Erzeugungseinheit aufzunehmen.

## Revendications

1. Station service sans émissions (2100) pour véhicules électriques (2158, 2150, 2152, 2140) comprenant :
a) un système de fourniture d'électricité pour charger au moins une batterie (2154, 2160, 2136) à l'intérieur dudit véhicule électrique, ledit système comprenant un chargeur principal (2130) pour charger ladite au moins une batterie dans ledit véhicule électrique, ledit chargeur principal comprenant un ensemble de batteries (2132), une unité de stockage électrique (2118) pour stocker l'électricité et charger ledit ensemble de batteries, une source d'alimentation sans émissions (2104, 2102) pour alimenter ladite unité de stockage électrique, et un régulateur de flux électrique (2120) permettant d'assurer que ledit ensemble de batteries dudit chargeur principal reste chargé à au moins un seuil minimum d'un niveau de charge maximum ;
b) un système de régulation en communication avec ledit au moins un véhicule électrique et ledit chargeur principal adaptés pour permettre audit chargeur principal de charger ladite au moins une batterie à l'intérieur dudit véhicule électrique ;
ladite station étant construite et configurée afin de répondre à au moins un des critères suivants :
i. minimiser la consommation de l'électricité du réseau ;
ii. minimiser la consommation d'électricité du réseau aux heures de pointe.

2. Station service sans émissions pour véhicules électriques selon la revendication 1, ledit véhicule électrique étant sélectionné dans le groupe composé d'une motocyclette électrique (2158), d'une voiture électrique (2150, 2152), d'un camion électrique, d'un véhicule de secours électrique, et d'un véhicule militaire électrique.

3. Station service sans émissions pour véhicules électriques selon la revendication 1, comprenant en outre un raccordement à un réseau électrique (2112), ledit système de fourniture d'électricité comprenant :
a) un générateur d'électricité photovoltaïque solaire (2104) ; et/ou
b) une éolienne (2102) ; et comprenant également :
c) un convertisseur continu-alternatif (2116) pour le traitement d'inter-conversions entre ledit système de fourniture d'électricité et ledit réseau électrique par le biais dudit raccordement.

4. Station service sans émissions pour véhicules électriques selon la revendication 3, la station comprenant à la fois générateur d'électricité photovoltaïque solaire et ladite éolienne, et dans laquelle si ledit régulateur de flux électrique détermine que la charge dudit chargeur principal est supérieure au pourcentage seuil maximum de ladite charge maximum, l'énergie produite par un ou les deux dudit générateur d'électricité photovoltaïque solaire et de ladite éolienne est amenée audit raccordement audit réseau électrique par le biais dudit convertisseur continu-alternatif, et, en alternative, l'énergie produite par un ou les deux dudit générateur d'électricité photovoltaïque solaire et de ladite éolienne est fournie audit chargeur principal.

5. Station service sans émissions selon la revendication 1, comprenant également un système d'alimentation en eau, le système d'alimentation en eau comprenant :
a) un générateur air-eau (2180) ;
b) une citerne de régulation du débit d'eau (2175) ;
c) un système de régulation d'eau (2105) ;
d) des conduits (2107) de raccordement entre les dispositifs susmentionnés, contrôlés par ledit système de régulation d'eau ;
e) une pluralité de vannes télécommandées (2181, 2183, 2185, 2194, 2196, 2197) placées dans lesdits conduits, et commandées par ledit système de régulation d'eau ; et
f) un raccordement aux canalisations d'eau (2195).

6. Station service sans émissions selon la revendication 5, ledit système de régulation d'eau commandant la production d'eau par ledit générateur air-eau, en fonction d'une combinaison de données historiques et de paramètres mesurés en temps réel.

7. Station service sans émissions pour véhicules électriques selon la revendication 1, ladite station service étant construite et configurée pour réaliser au moins un des suivants :
1. minimiser l'emploi d'eau courante ;
2. maximiser un emploi limité d'électricité du réseau aux heures de pointe ;
3. assurer l'absence d'émissions gazeuses provenant de carburants fossiles ;
4. assurer l'absence de déversements liquides relatifs aux carburants fossiles ; et
5. assurer une fourniture d'eau avec un générateur air-eau.

8. Station service sans émissions selon la revendication 7, ladite station service étant adaptée pour réaliser l'intégralité des suivants :
i. minimiser l'emploi d'eau courante ;
ii. minimiser l'emploi d'électricité du réseau ;
iii. minimiser l'emploi d'électricité du réseau aux heures de pointe ;
iv. maximiser un emploi limité d'électricité du réseau aux heures de pointe ;
v. assurer l'absence d'émissions gazeuses provenant de carburants fossiles ;
vi. assurer l'absence de déversements liquides relatifs aux carburants fossiles ; et
vii. assurer une fourniture d'eau avec un générateur air-eau.

9. Station service sans émissions selon la revendication 5, comprenant en outre au moins l'un des suivants :
1) au moins une unité de lavage de voitures (2400) ;
2) au moins une unité de douche (2184) ;
3) au moins une unité de toilettes (2182) ; et
4) au moins une unité d'approvisionnement alimentaire.

10. Station service sans émissions selon la revendication 8, comprenant toutes les unités suivantes :
1) au moins une unité de lavage de voitures ;
2) au moins une unité de douche ;
3) au moins une unité de toilettes ;
4) au moins une unité d'approvisionnement alimentaire.

11. Station service sans émissions selon la revendication 9, lesdites au moins une unité de lavage de voitures, au moins une unité de douche, au moins une unité de toilettes et au moins une unité d'approvisionnement alimentaire étant adaptées pour recevoir de l'eau indirectement dudit générateur air-eau.
